# EUROPEAN PATENT APPLICATION

(11) **EP 1 970 585 A2**
(43) Date of publication of application: **17.09.2008**
(21) Application number: 08101338.5
(22) Date of filing: 06.02.2008
(51) Int. Cl.: F16D 1/08

(54) **Rolling mill oil film bearing sleeve with filled keyway**

(30) Priority: 22.02.2007 US 677605
(71) Applicant: MORGAN CONSTRUCTION COMPANY, Worcester Massachusetts 01605 (US)
(72) Inventor: Divirgilio, Ralph, Jefferson, MA 01522 (US); Martins, Armando S., Cumberland, RI 02864 (US); Bonazoli, Stephen S., Worcester, MA 01602 (US); Wojtkowski, Thomas C., Shrewsbury, MA 01545 (US); Lafayette, Paul K., Leicester, MA 01524 (US)
(74) Representative: Dantz, Jan Henning

(57) **Abstract**

A method of at least partially filling a keyway in the metal sleeve of a rolling mill oil film bearing comprises machining a pocket into the keyway. A metal key is provided with a shape complimentary to that of the pocket, with at least one exterior dimension of the key exceeding a respective internal dimension of the pocket. The key is thermally shrunk to reduce its at least one external dimension to an extent sufficient to accommodate insertion of the key in the pocket. The thermally shrunk key is then inserted in the pocket, and allowed to thermally expand, thereby establishing an interference fit between the key and the pocket. (Fig. 4)

## Description

### BACKGROUND OF THE INVENTION

### 1. Field of the Invention

This invention relates to the sleeves of rolling mill oil film bearings, and is concerned in particular with the filing of keyways in the internal tapered surfaces of such sleeves.

### 2. Description of the Prior Art

U.S. Patent No. 5,136,766 describes a known method of filling sleeve keyways by undercutting the keyway side walls to receive and coact in interengagement with press-fitted dove-tail fillers. This approach has not been successful, due primarily to the tendency of the fillers to shift in the keyways as the sleeves deform in the bearing load zone. This in turn leads to wear of mating keyway and filler surfaces, and eventual loosening of the fillers.

The objective of the present invention is to provide an improved means of filling the sleeve keyways in a manner that avoids the problems of the prior art.

### SUMMARY OF THE INVENTION

The invention provides a method of at least partially filling a keyway in the metal sleeve of a rolling mill oil film bearing, said method comprising: machining a pocket into the keyway; providing a metal key having a shape complimentary to that of said pocket, with at least one exterior dimension exceeding the respective internal dimension of the pocket; thermally shrinking the key to reduce its at least one external dimension to an extent sufficient to accommodate insertion of the key in the pocket; inserting the key in the pocket; and allowing the thus inserted key to thermally expand, thereby establishing an interference fit between the key and the pocket.

Preferably a width dimension of the key exceeds a width dimension of the pocket.

According to another embodiment, the width of the key exceeds the width dimension of the pocket by between about 0.000175 to 0.000432 mm per 100mm of the sleeve outside diameter.

Furthermore, the invention provides a sleeve for a rolling mill oil film bearing, said sleeve comprising: a cylindrical outer surface and a tapered interior surface; a keyway in said tapered interior surface; a pocket machined in said keyway; and a key seated in said pocket with a thermally induced interference fit between exterior surfaces of said key and interior surfaces of said pocket.

In accordance with the present invention, a pocket is machined into the keyway. A key is configured with a shape complimentary to that of the pocket, with exterior dimensions that exceed respective interior dimensions of the pocket. The key is thermally shrunk to reduce its external dimensions to an extent sufficient to accommodate insertion of the key into the pocket. Following its insertion into the pocket, the key is allowed to thermally expand, thereby establishing an interference fit between those of its external surfaces that are confined between internal surfaces of the pocket.

### BRIEF DESCRIPTION OF THE DRAWINGS

Figure 1 is a longitudinal sectional view taken through a sleeve in accordance with present invention;
Figures 2A and 2B are respectively cross sectional and plan views illustrating the pocket machined into the keyway;
Figure 3 is a perspective view of the key; and
Figure 4 is a cross sectional view showing the key in place in the pocket, with portions of the key protruding above the keyway prior to machining to the final configuration shown in Figure 1.

### DETAILED DESCRIPTION

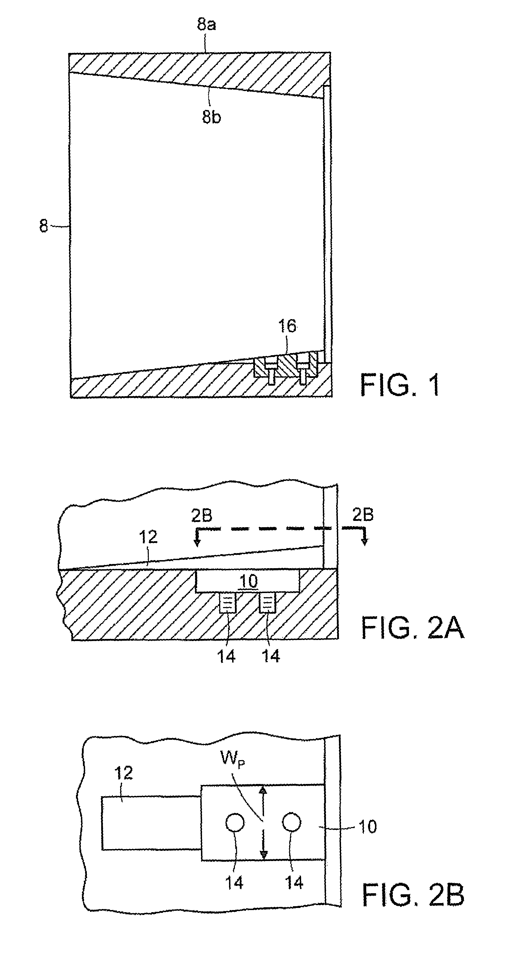

In accordance with the present invention, and as shown in Figures 1 and 2A and 2B, a sleeve 8 has a cylindrical outer surface 8a and a tapered interior surface 8b. Pocket 10 is machined into a sleeve keyway 12 in the interior tapered surface 8b. The pocket is preferable rectangular in shape with a width Wₚ that slightly exceeds the width of the keyway. Blind threaded bores 14 are preferably tapped into the bottom of the pocket.

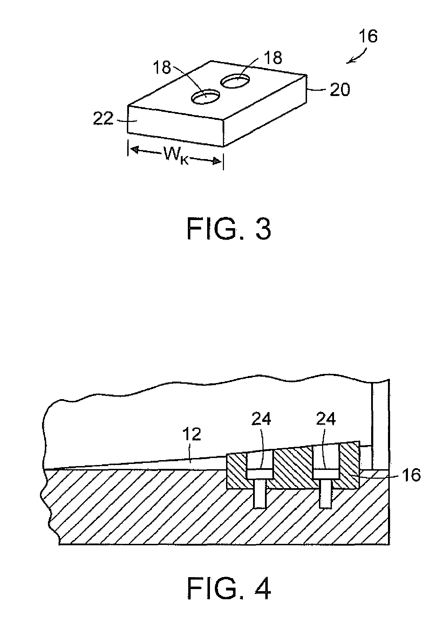

With reference to Figure 3, a key 16 is configured with a shape complimentary to that of the pocket 10. Exterior dimensions of the key exceed the respective interior dimensions of the pocket. In this case, the key width Wₖ exceeds the pocket width Wₚ. The key has through holes 18, and a tapered configuration with an outboard end 20 somewhat thicker than its inboard end 22.

The key is thermally shrunk to reduce its external dimensions, including in particular its width Wₖ, to an extent sufficient to accommodate its insertion into the pocket 10, as shown in Figure 4. The key is then allowed to thermally expand, thereby establishing an interference fit between those of its external surfaces that are confined between internal surfaces of the pocket. In the illustrated embodiment, the interference fit is between the sides of the key and the interior side walls of the pocket.

Preferably the key width Wₖ exceeds the width Wₚ of the pocket by between about 0.000175 to 0.000432mm per 100mm of the sleeve outside diameter.

Once the key has been inserted in the pocket, machine screws 24 are employed as a precautionary measure, and the excess surface material of the key projecting above the keyway 12 is removably machined, resulting in the assembly as shown in Figure 1.

The above described interference fit reliably resists movement of the key 16 within the pocket 10, and thus avoids wear at critical interfaces that can result in a loosening of the key.

In lights of the foregoing, it will be understood that the present invention is not limited to any particular pocket and key shape, and that shapes other than rectangular may be employed, as long as a sufficient interference fit is established by providing the key with at least one exterior dimension that exceeds a respective interior dimension of the pocket.

## Claims

1. A method of at least partially filling a keyway in the metal sleeve of a rolling mill oil film bearing, said method comprising:
machining a pocket into the keyway;
providing a metal key having a shape complimentary to that of said pocket, with at least one exterior dimension exceeding the respective internal dimension of the pocket;
thermally shrinking the key to reduce its at least one external dimension to an extent sufficient to accommodate insertion of the key in the pocket;
inserting the key in the pocket; and
allowing the thus inserted key to thermally expand, thereby establishing an interference fit between the key and the pocket.

2. The method of claim 1 wherein a width dimension of the key exceeds a width dimension of the pocket.

3. The method of claim 2 wherein the width of the key exceeds the width dimension of the pocket by between about 0.000175 to 0.000432 mm per 100mm of the sleeve outside diameter.

4. A sleeve for a rolling mill oil film bearing, said sleeve comprising:
a cylindrical outer surface and a tapered interior surface;
a keyway in said tapered interior surface;
a pocket machined in said keyway; and
a key seated in said pocket with a thermally induced interference fit between exterior surfaces of said key and interior surfaces of said pocket.
